# EUROPEAN PATENT APPLICATION

(11) **EP 3 883 310 A1**
(43) Date of publication of application: **22.09.2021**
(21) Application number: 18941868.4
(22) Date of filing: 26.11.2018
(51) Int. Cl.: H04W 72/04

(54) **INFORMATION GENERATION METHOD AND APPARATUS, INFORMATION INDICATION METHOD AND APPARATUS, AND TERMINAL**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LIU, Jianhua, Dongguan, Guangdong 523860 (CN)
(74) Representative: RGTH
(86) International application number: PCT/CN2018/117409
(87) International publication number: WO 2020/107147

(57) **Abstract**

Embodiments of the present application provide an information generation method and apparatus, an information indication method and apparatus, and a terminal. The method comprises: a first terminal generates first information on the basis of second information and a first threshold, wherein the first information is used for indicating a resource situation of a target interface, the target interface comprising a first interface and/or a second interface, the first interface being used for transmitting a signal between the first terminal and a second terminal, and the second interface being used for transmitting a signal between the first terminal and a base station.

## Description

### TECHNICAL FIELD

Embodiments of the present disclosure relate to the technical field of mobile communications, and particularly to a method and apparatus for information generation, a method and apparatus for information indication, and a terminal.

### BACKGROUND

An Internet of Vehicles system employs a Long Term Evolution (LTE)-Device to Device (D2D) based Sidelink (SL) transmission technology. Unlike a conventional LTE system in which communication data is received or transmitted through a base station, the Internet of vehicles system adopts a D2D communication mode and thus has higher spectrum efficiency and lower transmission delay.

There are two communication modes in the Internet of vehicles system: 1) communication between a terminal and a base station; and 2) communication between the terminals. Therefore, the terminal needs to support two interfaces to implement the above two communication modes respectively. However, how to determine a resource situation at the two interfaces is a problem to be solved.

### SUMMARY

The embodiments of the present disclosure provide a method and apparatus for information generation, a method and apparatus for information indication, and a terminal.

A method for information generation according to an embodiment of the present disclosure includes the following operation.

A first terminal generates first information based on second information and a first threshold. The first information is used for indicating a resource situation at a target interface, the target interface includes at least one of a first interface or a second interface, the first interface is used for transmitting a signal between the first terminal and a second terminal, and the second interface is used for transmitting a signal between the first terminal and a base station.

A method for information indication according to an embodiment of the present disclosure includes the following operation.

A first protocol entity of a first terminal reports first information to a third protocol entity. The third protocol entity is located at an upper layer of the first protocol entity. The first information is used for indicating a resource situation at a target interface, the target interface includes at least one of a first interface or a second interface, the first interface is used for transmitting a signal between the first terminal and a second terminal, and the second interface is used for transmitting a signal between the first terminal and a base station.

An apparatus for information generation according to an embodiment of the present disclosure includes a generating unit.

The generating unit is configured to generate first information based on second information and a first threshold. The first information is used for indicating a resource situation at a target interface, the target interface includes at least one of a first interface or a second interface, the first interface is used for transmitting a signal between the first terminal and a second terminal, and the second interface is used for transmitting a signal between the first terminal and a base station.

An apparatus for information indication according to an embodiment of the present disclosure includes a reporting unit.

The reporting unit is configured to report first information to a third protocol entity through a first protocol entity of a first terminal. The third protocol entity is located at an upper layer of the first protocol entity. The first information is used for indicating a resource situation at a target interface, the target interface includes at least one of a first interface or a second interface, the first interface is used for transmitting a signal between the first terminal and a second terminal, and the second interface is used for transmitting a signal between the first terminal and a base station.

A terminal according to an embodiment of the present disclosure includes a processor and a memory for storing a computer program. The processor is configured to call and run the computer program stored in the memory to execute the method for information generation or the method for information indication described above.

A chip according to an embodiment of the present disclosure is configured to perform the method for information generation or the method for information indication described above.

Specifically, the chip includes a processor, configured to call and run a computer program in a memory to enable a device installed with the chip to execute the method for information generation or the method for information indication described above.

A computer readable-storage medium according to an embodiment of the present disclosure is configured to store a computer program, the computer program enabling a computer to perform the method for information generation or the method for information indication described above.

A computer program product according to an embodiment of the present disclosure includes computer program instructions that cause a computer to perform the method for information generation or the method for information indication described above.

A computer program is provided according to an embodiment of the present disclosure, which, when run on a computer, causes the computer to execute the method for information generation or the method for information indication described above.

In the above technical solution, the first terminal determines the resource situation at the target interface according to the first information, so as to determine whether to transmit a signal through the first interface or the second interface, or both the first interface and the second interface. Herein, the first interface is used to transmit a signal between the first terminal and the second terminal, and the second interface is used to transmit a signal between the first terminal and the base station. Therefore, the first terminal can determine a way for communication based on the first information.

### BRIEF DESCRIPTION OF THE DRAWINGS

The drawings described herein are adopted to provide a further understanding to the present disclosure and form a part of the application. Schematic embodiments of the present disclosure and the description thereof are adopted to explain the present disclosure and not intended to form an improper limit to the present disclosure. In the drawings:
FIG. 1 is a schematic diagram of an architecture of a communication system according to an embodiment of the present disclosure.
FIG. 2 is a schematic diagram of mode 3 in Vehicle-to-Everything (V2X) according to an embodiment of the present disclosure.
FIG. 3 is a schematic diagram of mode 4 in V2X according to an embodiment of the present disclosure.
FIG. 4 is a flowchart of a method for information generation according to an embodiment of the present disclosure.
FIG. 5 is a flowchart of a method for information generation according to an embodiment of the present disclosure.
FIG. 6 is a schematic composition diagram of an apparatus for information generation according to an embodiment of the present disclosure.
FIG. 7 is a schematic composition diagram of an apparatus for information indication according to an embodiment of the present disclosure.
FIG. 8 is a schematic structure diagram of a communication device according to an embodiment of the present disclosure.
FIG. 9 is a schematic structure diagram of a chip according to an embodiment of the present disclosure.
FIG. 10 is a schematic block diagram of a communication system according to an embodiment of the present disclosure.

### DETAILED DESCRIPTION

The technical solutions in the embodiments of the present disclosure will be described below in combination with the drawings in the embodiments of the present disclosure. It is apparent that the described embodiments are not all of the embodiments but part of the embodiments of the present disclosure. All other embodiments obtained by those of ordinary skill in the art based on the embodiments of the present disclosure without creative work shall fall within the scope of protection of this application.

The technical solutions in the embodiments of the present disclosure may be applied to various communication systems, such as a Global System of Mobile communication (GSM), a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, or a 5G system.

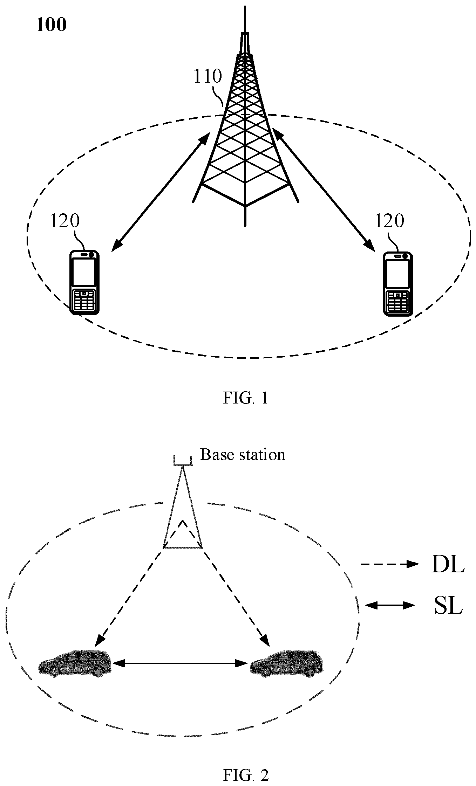

Exemplarily, a communication system 100 that the embodiments of the present disclosure are applied to is shown in FIG. 1. The communication system 100 may include a network device 110, and the network device 110 may be a device that communicates with a terminal 120 (or called a communication terminal or a terminal). The network device 110 may provide communication coverage for a particular geographic region and may communicate with a terminal located in the coverage. Optionally, the network device 110 may be a Base Transceiver Station (BTS) in a GSM or the CDMA system, may also be a NodeB (NB) in a WCDMA system, and may further be an Evolutional Node B (eNB or eNodeB) in an LTE system or a wireless controller in a Cloud Radio Access Network (CRAN). The network device may also be a mobile switching center, a relay station, an access point, a vehicle device, a wearable device, a hub, a switch, a network bridge, a router, a network-side device in a future 5G network, a network device in a future evolved Public Land Mobile Network (PLMN) or the like.

The communication system 100 further includes at least one terminal 120 within the coverage of the network device 110. A "terminal device" used herein includes, but not limited to, a device arranged to receive/send a communication signal through a wired line connection, for example, through Public Switched Telephone Networks (PSTN), Digital Subscriber Line (DSL), digital cable and direct cable connections, and/or another data connection/network and/or through a wireless interface, for example, through a cellular networks, a Wireless Local Area Network (WLAN), a digital television networks like a Digital Video Broadcasting-Handheld (DVB-H) networks, a satellite network or an Amplitude Modulated (AM)-Frequency Modulated (FM) broadcast transmitters, and/or via another communication terminal, and/or Internet of Things (IoT) device. The terminal arranged to communicate through a wireless interface may be called a "wireless communication terminal", a "wireless terminal" or a "mobile terminal". Examples of mobile terminals include, but not limited to, a satellite or cellular telephone, a Personal Communications System (PCS) terminal capable of combining a cellular radio telephone and data processing, faxing and data communication capabilities, a Personal Digital Assistant (PDA) capable of including a radio telephone, a pager, Internet/Intranet access, a Web browser, a notebook, a calendar and/or a Global Positioning System (GPS) receiver, and a conventional laptop and/or palmtop receiver or another electronic devices including a radio telephone transceiver. The terminal may refer to an access terminal, User Equipment (UE), a user unit, a user station, a remote terminal, a mobile radio station, a remote station, a remote terminal, a mobile device, a user terminal, a terminal, a wireless communication device, a user agent or a user device. The access terminal may be a cellphone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle device, a wearable device, a terminal in the 5G network, a terminal in the future evolved PLMN or the like.

Optionally, the terminal 120 may perform Device to Device (D2D) communication with another terminal.

Optionally, the 5G system or the 5G network may also be called a New Radio (NR) system or an NR network.

A network device and two terminals are exemplarily shown in FIG. 1. Optionally, the communication system 100 may include multiple network devices and another number of terminals may be included in the coverage area of each network device. There are no limits made thereto in the embodiments of the present disclosure.

Optionally, the communication system 100 may further include other network entities such as a network controller, a mobility management entity. There are no limits made thereto in the embodiments of the present disclosure.

It is to be understood that a device with a communication function in a network/system in the embodiments of the present disclosure may be called a communication device. For example, for the communication system 100 shown in FIG. 1, the communication device may include the network device 110 and the terminal 120 with the communication function, and the network device 110 and the terminal 120 may be specific devices mentioned above and will not be elaborated herein. The communication device may further include other devices in the communication system 100, for example, other network entities like a network controller and a mobility management entity. There are no limits made thereto in the embodiments of the present disclosure.

It is to be understood that the terms "system" and "network" in the disclosure may usually be used interchangeably. In the disclosure, term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

In the 3rd Generation Partnership Project (3GPP) Release 14 (Rel-14), an Internet of vehicles technology, i.e., a Vehicle to Everything (V2X) technology, is standardized, and two transmission modes are defined: a mode 3 and a mode 4. In mode 3, a transmission resource of the terminal is allocated by a base station. In mode 4, the terminal determines the transmission resource in a manner combining sensing and reservation.

Mode 3: as shown in FIG. 2, the transmission resource for Vehicle User Equipment (VUE) is allocated by a base station. Specifically, the base station sends a control message indicating a grant resource to the VUE through a Down Link (DL). Then, the VUE transmits data on the SL according to the resource allocated by the base station. In the mode 3, the base station may allocate a resource for single transmission to the terminal device and may also allocate a resource for semi-persistent transmission to the terminal device.

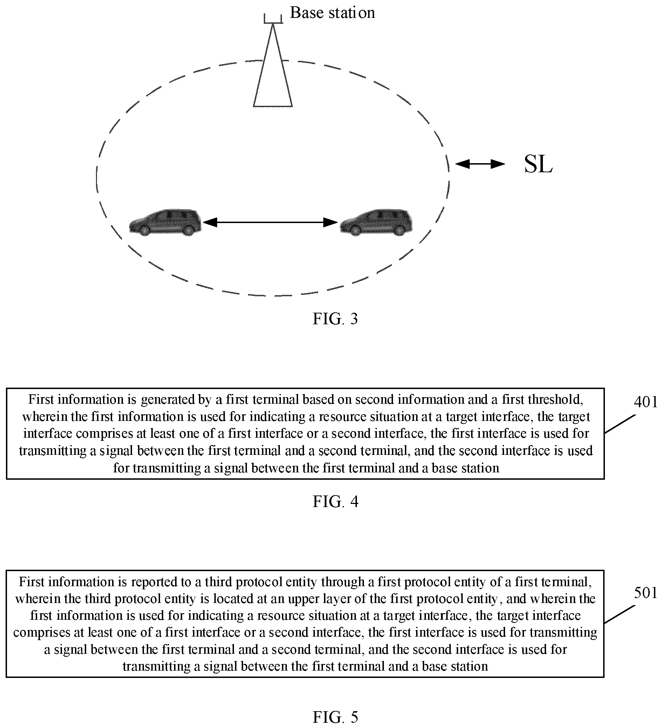

Mode 4: as shown in FIG. 3, the VUE adopts a transmission manner combining sensing and reservation. The VUE acquires an available transmission resource set from a resource pool by sensing, and randomly selects a resource from the available transmission resource set for data transmission. Since a service in the Internet of Vehicles system is periodic, the VUE usually adopts a semi-persistent transmission manner, namely the VUE, after selecting a transmission resource, may keep using the resource in multiple transmission cycles, so that probabilities of resource reselection and resource conflict are reduced. The VUE may carry information for reserving a next transmission resource in control information transmitted this time such that another terminal device may detect the control information of the terminal device to determine whether the resource is reserved and used by the terminal device or not, so as to reduce resource conflicts.

It should be noted that in LTE-V2X, the mode 3 indicates that the transmission resource of the VUE is allocated by the base station, and the mode 4 indicates that the transmission resource of the VUE is autonomously selected by the terminal. However, in NR-V2X, a new transmission mode may be defined, which is not limited in the present disclosure.

All the technical solutions in the embodiments of the present disclosure are applicable not only to the Internet of Vehicles system, but also to other end-to-end communication systems. The terminal in the embodiments of the present disclosure may be a Vehicle User Equipment (VUE), a handheld terminal, a Personal Digital Assistant (PDA), a wearable terminal, or the like. The network in the embodiments of the present disclosure may be an NR network, an LTE network, or the like.

FIG. 4 is a flowchart of a method for information generation according to an embodiment of the present disclosure. As shown in FIG. 4, the method for information generation includes the following operations.

At block 401, first information is generated by a first terminal based on second information and a first threshold. The first information is used for indicating a resource situation at a target interface, the target interface includes at least one of a first interface or a second interface, the first interface is used for transmitting a signal between the first terminal and a second terminal, and the second interface is used for transmitting a signal between the first terminal and a base station.

In the embodiment of the present disclosure, the first terminal may be a VUE, a handheld terminal, a PDA, a wearable terminal, or the like. The second terminal may be a VUE, a handheld terminal, a PDA, a wearable terminal, or the like. The types of the first terminal and the second terminal may be the same, and may also be different. For example, the first terminal is the handheld terminal, and the second terminal is the VUE For another example, the first terminal is a VUE A, and the second terminal is a VUE B.

In the embodiment of the present disclosure, the first terminal has at least the first interface and the second interface. The first interface is used for transmitting the signal between the first terminal and the second terminal, and the second interface is used for transmitting the signal between the first terminal and the base station. The first interface is an SL interface, and the second interface is an uplink interface and/or a downlink interface.

It should be noted that the uplink interface and the downlink interface may be the same interface or may be two separate interfaces.

In the embodiment of the present disclosure, the first information is generated by the first terminal based on the second information and the first threshold. The first information is used for indicating the resource situation at the target interface. Herein, the first interface and the second interface of the first terminal may share one piece of the first information, and the first interface and the second interface may also correspond to two separate pieces of first information, respectively. For example, the resource situation at the first interface and/or the resource situation at the second interface are/is indicated jointly by one piece of first information. For another example, the resource situation at the first interface is indicated by one piece of the first information, and the resource situation at the second interface is indicated by another piece of the first information.

In the embodiment of the present disclosure, two implementation manners are used for the first information to indicate the resource situation at the target interface.

First Manner: the first information is used for indicating whether the target interface is capable of performing data transmission.

In one example, the first information includes a bitmap including two bits. The first bit corresponds to the first interface, and the second bit corresponds to the second interface. The value of each bit indicates whether the corresponding interface is capable of performing data transmission. The bit value of "1" indicates that the corresponding interface is capable of performing data transmission, while the bit value of "0" indicates that the corresponding interface is not capable of performing data transmission.

In another example, the first information includes 1-bit information, and the first interface and the second interface correspond to two separate pieces of first information, respectively. The value of the 1-bit information indicates whether the corresponding interface is capable of performing data transmission. The bit value of "1" indicates that the corresponding interface is capable of performing data transmission, while the bit value of "0" indicates that the corresponding interface is not capable of performing data transmission.

Second manner: the first information is used for indicating a physical layer parameter of the target interface.

Herein, the physical layer parameter includes at least one of a mode for modulation and demodulation, a number of sub-channels, a number of retransmissions, or a transmission power.

It should be noted that the first information may indicate a range of the physical layer parameter. The first terminal may select a physical layer parameter from the range according to the first information, and match the selected physical layer parameter with the first interface and the second interface. An interface that matches with the selected physical layer parameter may be used for data transmission, and an interface that does not match with the selected physical layer parameter may not be used for data transmission.

In the embodiments of the present disclosure, the first information is generated by comparing the second information with the first threshold. Specific implementation of the second information is described below.

The second information includes at least one of a channel busy ratio of an SL resource, channel quality information of an SL, channel quality information of a downlink, or a range of a physical layer parameter.

### 1) Channel busy ratio of an SL resource

Herein, the channel busy ratio of the SL resource indicates a busy degree of the SL resource. The busier the SL resources are, the fewer available (i.e., idle) SL resources are. On the contrary, the less busy the SL resources are, the more available (i.e., idle) SL resources are. To balance a load of the network, the channel busy ratio of the SL resource may be compared with a defined first threshold. In response to determining that the channel busy ratio of the SL resource is greater than or equal to the first threshold, the generated first information tends to use the second interface to transmit signals. In response to determining that the channel busy ratio of the SL resource is less than the first threshold, the generated first information tends to use the first interface to transmit signals, and higher spectral efficiency and lower transmission delay may be achieved through the first interface.

### 2) Channel quality information of an SL

Herein, the channel quality information of the SL includes at least one of:
a Reference Signal Received Power (RSRP) measurement result of the SL, a Reference Signal Received Quality (RSRQ) measurement result of the SL, a Received Signal Strength Indicator (RSSI) measurement result of the SL, or a Signal to Interference Noise Ratio (SINR) measurement result of the SL.

Herein, the channel quality information of the SL indicates whether the channel quality of the SL is good or bad. In order to optimize a transmission quality of a service, the channel quality information of the SL may be compared with a defined first threshold. When the comparison result indicates that the channel quality of the SL is poor, the generated first information tends to use the second interface to transmit signals. When the comparison result indicates that the channel quality of the SL is good, the generated first information tends to use the first interface to transmit signals, and higher spectral efficiency and lower transmission delay may be achieved through the first interface.

### 3) Channel quality information of a downlink

Herein, the channel quality information of the downlink includes at least one of:
an RSRP measurement result of the downlink, an RSRQ measurement result of the downlink, an RSSI measurement result of the downlink, or a SINR measurement result of the downlink. Further, the channel quality information of the downlink refers to channel quality information of a downlink in a network presently accessed by the terminal, or channel quality information of a downlink in a network in which the terminal presently resides.

Herein, the channel quality information of the downlink indicates whether the channel quality of the downlink is good or bad. In order to optimize the transmission quality of the service, the channel quality information of the downlink may be compared with a defined first threshold. When the comparison result indicates that the channel quality of the downlink is poor, the generated first information tends to use the first interface to transmit signals. When the comparison result indicates that the channel quality of the downlink is good, the generated first information tends to use the first interface to transmit signals.

### 4) Range of the physical layer parameter

Herein, the physical layer parameter includes at least one of a mode for modulation and demodulation, a number of sub-channels, a number of retransmissions, or a transmission power. The physical layer parameter is generated according to at least one of a channel busy ratio of an SL resource, channel quality information of the SL, or Quality of Service (QoS) attribute information of the SL. Furthermore, the QoS attribute information of the SL includes at least priority information.

It should be noted that after obtaining the range of the physical layer parameter, the first terminal may select a physical layer parameter from the range, and match the selected physical layer parameter with the first interface and the second interface. An interface that matches with the selected physical layer parameter may be used for data transmission, and an interface that does not match with the selected physical layer parameter may not be used for data transmission.

In the above solution in the embodiments of the present disclosure, the first threshold is configured or pre-configured by a network. For example, the first threshold is configured by the network through Non-Access Stratum (NAS) signaling or Radio Resource Control (RRC) signaling.

In an application scenario, the first terminal has at least three layers of protocol entities, i.e., a first protocol entity, a second protocol entity, and a third protocol entity, respectively. The first protocol entity is, for example, a V2X layer, the second protocol entity is, for example, an access layer, and the third protocol entity is, for example, an application layer. The third protocol entity is located at an upper layer of the first protocol entity, and the second protocol entity is located at a lower layer of the first protocol entity.

Based on this, the method further includes that the first protocol entity of the first terminal reports the first information to the third protocol entity.

Herein, the second information and the first threshold on the first protocol entity side of the first terminal may be determined in following manners.
1) Determination of the second information: the second information is acquired by the first protocol entity, or the second information is reported by the second protocol entity to the first protocol entity.
2) Determination of the first threshold: the first threshold is acquired by the first protocol entity, or the first threshold is reported by the second protocol entity to the first protocol entity.

In the above solution in the embodiments of the present disclosure, the first threshold, the second information, and the first information each have different values in different situations. Details are described as follows.
1) The value of the first threshold is determined based on at least one of the following reference information: QoS attribute information, a transmission mode, an access type, a resource pool type, a Provider Service Identifier (PSID), a destination address or a source address.
   Furthermore, different reference information corresponds to different values of the first threshold.
2) The value of the second information is determined based on at least one of the following reference information: QoS attribute information, a transmission mode, an access type, a resource pool type, a PSID, a destination address, or a source address.
   Furthermore, different reference information corresponds to different values of the second information.
3) The value of the first information is determined based on at least one of the following reference information: QoS attribute information, a transmission mode, an access type, a resource pool type, a PSID, a destination address or a source address.

Furthermore, different reference information corresponds to different values of the first information.

In the above solution, the transmission mode includes a unicast mode, a multicast mode, a broadcast mode, or the like.

In the above solution, the access type includes but is not limited to an LTE access and an NR access.

FIG. 5 is a flowchart of a method for information generation according to an embodiment of the present disclosure. As shown in FIG. 5, the method for information generation includes the following operation.

At block 501, a first protocol entity of a first terminal reports first information to a third protocol entity. The third protocol entity is located at an upper layer of the first protocol entity. The first information is used for indicating a resource situation at a target interface, the target interface includes at least one of a first interface or a second interface, the first interface is used for transmitting a signal between the first terminal and a second terminal, and the second interface is used for transmitting a signal between the first terminal and a base station.

In the embodiment of the present disclosure, the first terminal may be a VUE, a handheld terminal, a PDA, a wearable terminal, or the like. The second terminal may be a VUE, a handheld terminal, a PDA, a wearable terminal, or the like. Types of the first terminal and the second terminal may be the same and may also be different. For example, the first terminal is the handheld terminal, and the second terminal is the VUE For another example, the first terminal is a VUE A, and the second terminal is a VUE B.

In the embodiment of the present disclosure, the first terminal has at least the first interface and the second interface. The first interface is used for transmitting the signal between the first terminal and the second terminal, and the second interface is used for transmitting the signal between the first terminal and the base station. Herein, the first interface is an SL interface, and the second interface is an uplink interface and/or a downlink interface.

It should be noted that the uplink interface and the downlink interface may be the same interface and may also be two separate interfaces.

In the embodiment of the present disclosure, two implementation manners are used for the first information to indicate the resource situation at the target interface.

First manner: the first information is used for indicating whether the target interface is capable of performing data transmission.

In one example, the first information includes a bitmap including two bits. The first bit corresponds to the first interface, and the second bit corresponds to the second interface. A value of each bit indicates whether the corresponding interface is capable of performing data transmission. For example, a bit value of "1" indicates that the corresponding interface is capable of performing data transmission, while a bit value of "0" indicates that the corresponding interface is not capable of performing data transmission.

In another example, the first information includes 1-bit information, and the first interface and the second interface correspond to two separate pieces of first information, respectively. A value of the 1-bit information indicates whether the corresponding interface is capable of performing data transmission. For example, a bit value of "1" indicates that the corresponding interface is capable of performing data transmission, while a bit value of "0" indicates that the corresponding interface is not capable of performing data transmission.

Second manner: the first information is used for indicating a physical layer parameter of the target interface.

Herein, the physical layer parameter includes at least one of a mode for modulation and demodulation, a number of sub-channels, a number of retransmissions, or a transmission power.

It should be noted that the first information may indicate a range of a physical layer parameter. The first terminal may select a physical layer parameter from the range according to the first information, and match the selected physical layer parameter with the first interface and the second interface. An interface that matches with the selected physical layer parameter may be used for data transmission, and an interface that does not match with the selected physical layer parameter may not be used for data transmission.

In an application scenario, the first terminal has at least three layers of protocol entities, i.e., a first protocol entity, a second protocol entity, and a third protocol entity, respectively. The first protocol entity is, for example, a V2X layer, the second protocol entity is, for example, an access layer, and the third protocol entity is, for example, an application layer. The third protocol entity is located at an upper layer of the first protocol entity, and the second protocol entity is located at a lower layer of the first protocol entity.

In the embodiment of the present disclosure, the first information is generated by comparing the second information with the first threshold. Details may refer to the related description about the method for information generation shown in FIG. 4 and will not be elaborated herein.

In the embodiment of the present disclosure, the value of the first information is determined based on at least one of the following reference information: QoS attribute information, a transmission mode, an access type, a resource pool type, a PSID, a destination address or a source address. Furthermore, different reference information corresponds to different values of the first information.

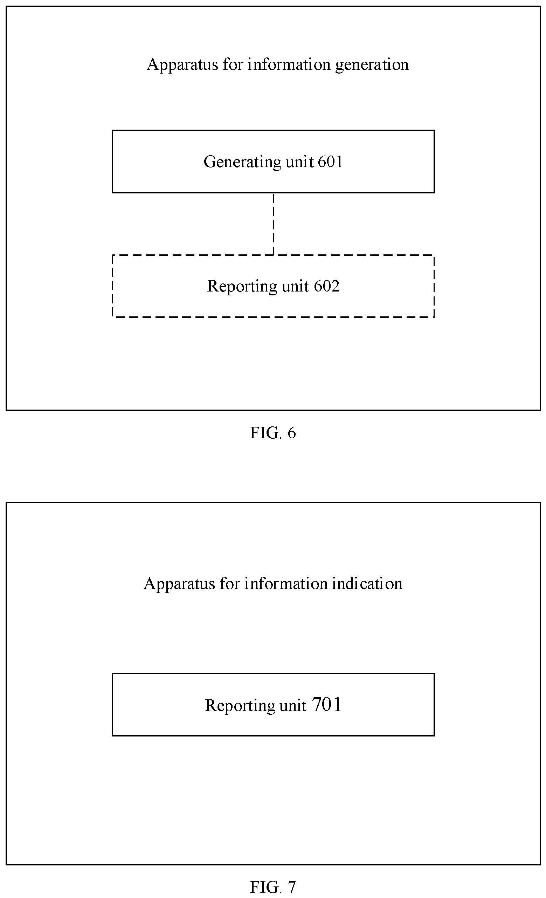

FIG. 6 is a schematic structure diagram of an apparatus for information generation according to an embodiment of the present disclosure. As shown in FIG. 6, the apparatus includes a generating unit 601.

The generating unit 601 is configured to generate first information based on second information and a first threshold. The first information is used for indicating a resource situation at a target interface, the target interface includes at least one of a first interface or a second interface, the first interface is used for transmitting a signal between the first terminal and a second terminal, and the second interface is used for transmitting a signal between the first terminal and a base station.

In an implementation, that the first information is used for indicating the resource situation at the target interface includes one of the following.

The first information is used for indicating whether the target interface is capable of performing data transmission.

The first information is used for indicating a physical layer parameter of the target interface.

In an implementation, the second information includes at least one of:
a channel busy ratio of an SL resource, channel quality information of an SL, channel quality information of a downlink or a range of a physical layer parameter.

In an implementation, the channel quality information of the SL includes at least one of:
an RSRP measurement result of the SL, an RSRQ measurement result of the SL, an RSSI measurement result of the SL, or a SINR measurement result of the SL.

In an implementation, the channel quality information of the downlink includes at least one of:
an RSRP measurement result of the downlink, an RSRQ measurement result of the downlink, an RSSI measurement result of the downlink, or a SINR measurement result of the downlink.

In an implementation, the channel quality information of the downlink refers to:
channel quality information of a downlink in a network presently accessed by the terminal; or,
channel quality information of a downlink in a network in which the terminal presently resides.

In an implementation, the physical layer parameter includes at least one of a mode for modulation and demodulation, a number of sub-channels, a number of retransmissions, or a transmission power.

In an implementation, the physical layer parameter is generated according to at least one of:
a channel busy ratio of an SL resource, the channel quality information of the SL, or QoS attribute information of the SL.

In an implementation, the QoS attribute information of the SL includes at least priority information.

In an implementation, the first threshold is configured or pre-configured by a network.

In an implementation, the first threshold is acquired by a first protocol entity, or, the first threshold is reported by a second protocol entity to the first protocol entity and the second protocol entity is located at a lower layer of the first protocol entity.

In an implementation, the value of the first threshold is determined based on at least one of the following reference information:

QoS attribute information, a transmission mode, an access type, a resource pool type, a PSID, a destination address or a source address.

In an implementation, different reference information corresponds to different values of the first threshold.

In an implementation, the value of the second information is determined based on at least one of the following reference information:

QoS attribute information, a transmission mode, an access type, a resource pool type, a PSID, a destination address or a source address.

In an implementation, different reference information corresponds to different values of the second information.

In an implementation, the second information is acquired by a first protocol entity, or, the second information is reported by a second protocol entity to the first protocol entity, and the second protocol entity is located at a lower layer of the first protocol entity.

In an implementation, the value of the first information is determined based on at least one of the following reference information:

QoS attribute information, a transmission mode, an access type, a resource pool type, a PSID, a destination address or a source address.

In an implementation, different reference information corresponds to different values of the first information.

In an implementation, the apparatus further includes a reporting unit 602.

The reporting unit 602 is configured to report the first information to a third protocol entity through the first protocol entity of the first terminal. The third protocol entity is located at an upper layer of the first protocol entity.

In an implementation, the first interface is an SL interface.

The second interface is at least one of an uplink interface or a downlink interface.

Those skilled in the art will appreciate that the relevant description about the apparatus for information generation in the embodiments of the present disclosure may be understood with reference to the relevant description about the method for information generation in the embodiments of the present disclosure.

FIG. 7 is a schematic structure diagram of an apparatus for information indication according to an embodiment of the present disclosure. As shown in FIG. 7, the apparatus includes a reporting unit 701.

The reporting unit 701 is configured to report first information to a third protocol entity through a first protocol entity of a first terminal. The third protocol entity is located at an upper layer of the first protocol entity. The first information is used for indicating a resource situation at a target interface, the target interface includes at least one of a first interface or a second interface, the first interface is used for transmitting a signal between the first terminal and a second terminal, and the second interface is used for transmitting a signal between the first terminal and a base station.

In an implementation, that the first information is used for indicating the resource situation at the target interface includes one of the following.

The first information is used for indicating whether the target interface is capable of performing data transmission.

The first information is used for indicating a physical layer parameter of the target interface.

In an implementation, the value of the first information is determined based on at least one of the following reference information:

QoS attribute information, a transmission mode, an access type, a resource pool type, a PSID, a destination address or a source address.

In an implementation, different reference information corresponds to different values of the first information.

In an implementation, the first interface is an SL interface.

The second interface is at least one of an uplink interface or a downlink interface.

Those skilled in the art will appreciate that the relevant description about the apparatus for information indication in the embodiments of the present disclosure may be understood with reference to the relevant description about the method for information indication in the embodiments of the present disclosure.

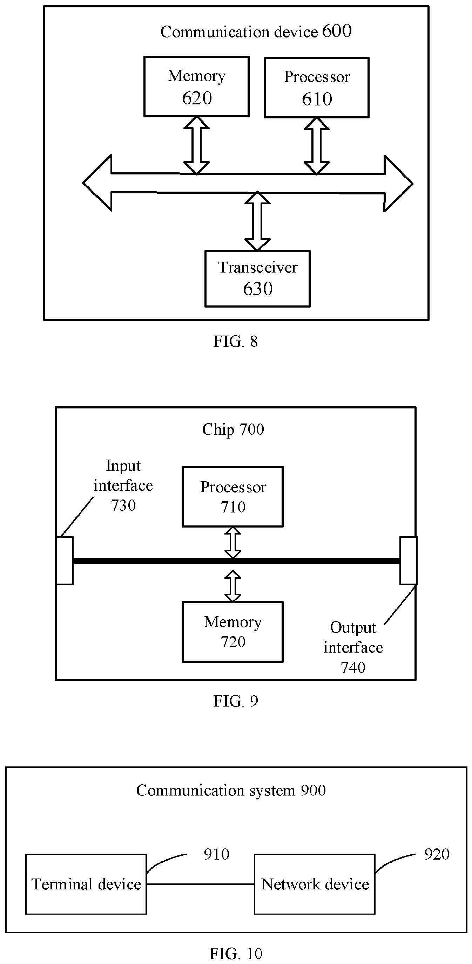

FIG. 8 is a schematic structure diagram of a communication device 600 according to an embodiment of the disclosure. The communication device may be any type of terminal. The communication device 600 shown in FIG. 8 includes a processor 610, and the processor 610 may call and run a computer program in a memory to implement the methods in the embodiments of the disclosure.

Optionally, as shown in FIG. 8, the communication device 600 may further include the memory 620. The processor 610 may call and run the computer program in the memory 620 to implement the methods in the embodiments of the disclosure.

The memory 620 may be an independent device independent of the processor 610 and may also be integrated into the processor 610.

Optionally, as shown in FIG. 8, the communication device 600 may further include a transceiver 630, and the processor 610 may control the transceiver 630 to communicate with another device. Specifically, the processor 610 may control the transceiver 630 to send information or data to the other device or to receive information or data from the other device.

The transceiver 630 may include a transmitter and a receiver. The transceiver 630 may further include antennae, and the number of the antennae may be one or more.

Optionally, the communication device 600 may specifically be a network device in the embodiment of the disclosure, and the communication device 600 may be configured to implement corresponding flows implemented by the network device in each method in the embodiments of the disclosure. For simplicity, elaborations are omitted herein.

Optionally, the communication device 600 may specifically be the mobile terminal/terminal device in the embodiments of the disclosure, and the communication device 600 may be configured to implement corresponding flows implemented by the mobile terminal/terminal device in each method in the embodiments of the disclosure. For simplicity, elaborations are omitted herein.

FIG. 9 is a schematic structure diagram of a chip according to an embodiment of the disclosure. The chip 700 shown in FIG. 9 includes a processor 710, and the processor 710 may call and run a computer program in a memory to implement the methods in the embodiments of the disclosure.

Optionally, as shown in FIG. 9, the chip 700 may further include the memory 720. The processor 710 may call and run the computer program in the memory 720 to implement the methods in the embodiments of the disclosure.

The memory 720 may be an independent device independent of the processor 710 and may also be integrated into the processor 710.

Optionally, the chip 700 may further include an input interface 730. The processor 710 may control the input interface 730 to communicate with another device or chip, such as acquiring information or data from the other device or chip.

Optionally, the chip 700 may further include an output interface 740. The processor 710 may control the output interface 740 to communicate with the other device or chip, such as outputting information or data to the other device or chip.

Optionally, the chip may be applied to the network device in the embodiments of the disclosure, and the chip may implement corresponding flows implemented by the network device in each method in the embodiments of the disclosure. For simplicity, elaborations are omitted herein.

Optionally, the chip may be applied to the mobile terminal/terminal device in the embodiment of the disclosure, and the chip may implement corresponding flows implemented by the mobile terminal/terminal device in each method in the embodiment of the disclosure. For simplicity, elaborations are omitted herein.

It is to be understood that the chip mentioned in the embodiment of the disclosure may also be called a system-level chip, a system chip, a chip system or a system on chip, etc.

FIG. 10 is a schematic block diagram of a communication system 900 according to an embodiment of the disclosure. As shown in FIG. 10, the communication system 900 includes a terminal device 910 and a network device 920.

The terminal device 910 may be configured to implement corresponding functions implemented by the terminal device in the above methods, and the network device 920 may be configured to implement corresponding functions implemented by the network device in the above methods. For simplicity, elaborations are omitted herein.

It is to be understood that the processor in the embodiment of the disclosure may be an integrated circuit chip and has a signal processing capability. In an implementation process, each step in the method embodiments may be completed by an integrated logical circuit in a hardware form in the processor or an instruction in a software form. The processor may be a general purpose processor, a Digital Signal Processor (DSP), an Application Specific Integrated Circuit (ASIC), a Field Programmable Gate Array (FPGA) or another programmable logical device, discrete gate or transistor logical device and discrete hardware component. Each method, step and logical block diagram disclosed in the embodiments of the disclosure may be implemented or executed. The general purpose processor may be a microprocessor or the processor may also be any conventional processor and the like. The steps in the method disclosed in combination with the embodiments of the disclosure may be directly embodied to be executed and completed by a hardware decoding processor or executed and completed by a combination of hardware in the decoding processor and software modules. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the steps in the method in combination with the hardware thereof.

It can be understood that the memory in the embodiment of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be an RAM, and is used as an external high-speed cache. In an exemplary but non-limiting embodiment, RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory in a system and method described in the disclosure is intended to include, but not limited to, memories of these and any other proper types.

It is to be understood that the memory is exemplarily but unlimitedly described. For example, the memory in the embodiments of the disclosure may also be an SRAM, a DRAM, an SDRAM, a DDR SDRAM, an ESDRAM, an SLDRAM and a DR RAM That is, the memory in the embodiments of the disclosure is intended to include, but not limited to, memories of these and any other proper types.

The embodiments of the disclosure also provide a computer-readable storage medium, which is configured to store a computer program.

Optionally, the computer-readable storage medium may be applied to a network device in the embodiments of the disclosure, and the computer program enables a computer to execute corresponding flows implemented by the network device in each method in the embodiments of the disclosure. For simplicity, elaborations are omitted herein.

Optionally, the computer-readable storage medium may be applied to a mobile terminal/terminal device in the embodiments of the disclosure, and the computer program enables a computer to execute corresponding flows implemented by the mobile terminal/terminal device in each method in the embodiments of the disclosure. For simplicity, elaborations are omitted herein.

The embodiments of the disclosure also provide a computer program product, which includes a computer program instruction.

Optionally, the computer program product may be applied to a network device in the embodiments of the disclosure, and the computer program instruction enables a computer to execute corresponding flows implemented by the network device in each method in the embodiments of the disclosure. For simplicity, elaborations are omitted herein.

Optionally, the computer program product may be applied to a mobile terminal/terminal device in the embodiments of the disclosure, and the computer program instruction enables the computer to execute corresponding flows implemented by the mobile terminal/terminal device in each method in the embodiments of the disclosure. For simplicity, elaborations are omitted herein.

The embodiments of the disclosure also provide a computer program.

Optionally, the computer program may be applied to a network device in the embodiments of the disclosure, and the computer program, when being executed in a computer, causes the computer to execute corresponding flows implemented by the network device in each method in the embodiments of the disclosure. For simplicity, elaborations are omitted herein.

Optionally, the computer program may be applied to a mobile terminal/terminal device in the embodiments of the disclosure, and the computer program, when being executed in the computer, causes the computer to execute corresponding flows implemented by the mobile terminal/terminal device in each method in the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may refer to the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical, mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions in the embodiments according to a practical requirement.

In addition, each functional unit in each embodiment of the disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the disclosure. The abovementioned storage medium includes: various media capable of storing program codes such as a U disk, a mobile hard disk, a ROM, a RAM, a magnetic disk or an optical disk.

Described above are merely specific embodiments of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for information generation, comprising:
generating, by a first terminal, first information based on second information and a first threshold, wherein the first information is used for indicating a resource situation at a target interface, the target interface comprises at least one of a first interface or a second interface, the first interface is used for transmitting a signal between the first terminal and a second terminal, and the second interface is used for transmitting a signal between the first terminal and a base station.

2. The method of claim 1, wherein the first information being used for indicating the resource situation at the target interface comprises:
the first information being used for indicating whether the target interface is capable of performing data transmission; or
the first information being used for indicating a physical layer parameter of the target interface.

3. The method of claim 1 or 2, wherein the second information comprises at least one of:
a channel busy ratio of a Sidelink (SL) resource, channel quality information of an SL, channel quality information of a downlink or a range of a physical layer parameter.

4. The method of claim 3, wherein the channel quality information of the SL comprises at least one of:
a Reference Signal Received Power (RSRP) measurement result of the SL, a Reference Signal Received Quality (RSRQ) measurement result of the SL, a Received Signal Strength Indicator (RSSI) measurement result of the SL, or a Signal to Interference Noise Ratio (SINR) measurement result of the SL.

5. The method of claim 3 or 4, wherein the channel quality information of the downlink comprises at least one of:
an RSRP measurement result of the downlink, an RSRQ measurement result of the downlink, an RSSI measurement result of the downlink, or a SINR measurement result of the downlink.

6. The method of any one of claims 3 to 5, wherein the channel quality information of the downlink refers to:
channel quality information of a downlink in a network presently accessed by the terminal; or
channel quality information of a downlink in a network in which the terminal presently resides.

7. The method of any one of claims 3 to 6, wherein the physical layer parameter comprises at least one of: a mode for modulation and demodulation, a number of sub-channels, a number of retransmissions, or a transmission power.

8. The method of any one of claims 3 to 7, wherein the physical layer parameter is generated according to at least one of:
the channel busy ratio of the SL resource, the channel quality information of the SL, or Quality of Service (QoS) attribute information of the SL.

9. The method of claim 8, wherein the QoS attribute information of the SL comprises at least priority information.

10. The method of any one of claims 1 to 9, wherein the first threshold is configured or pre-configured by a network.

11. The method of any one of claims 1 to 10, wherein
the first threshold is acquired by a first protocol entity; or
the first threshold is reported by a second protocol entity to the first protocol entity, and the second protocol entity is located at a lower layer of the first protocol entity.

12. The method of any one of claims 1 to 11, wherein a value of the first threshold is determined based on at least one of the following reference information:
Quality of Service (QoS) attribute information, a transmission mode, an access type, a resource pool type, a Provider Service Identifier (PSID), a destination address or a source address.

13. The method of claim 12, wherein different reference information corresponds to different values of the first threshold.

14. The method of any one of claims 1 to 13, wherein a value of the second information is determined based on at least one of the following reference information:
Quality of Service (QoS) attribute information, a transmission mode, an access type, a resource pool type, a Provider Service Identifier (PSID), a destination address or a source address.

15. The method of claim 14, wherein different reference information corresponds to different values of the second information.

16. The method of any one of claims 1 to 15, wherein
the second information is acquired by a first protocol entity; or
the second information is reported by a second protocol entity to the first protocol entity, and the second protocol entity is located at a lower layer of the first protocol entity.

17. The method of any one of claims 1 to 16, wherein a value of the first information is determined based on at least one of the following reference information:
Quality of Service (QoS) attribute information, a transmission mode, an access type, a resource pool type, a Provider Service Identifier (PSID), a destination address or a source address.

18. The method of claim 17, wherein different reference information corresponds to different values of the first information.

19. The method of any one of claims 1 to 18, further comprising:
reporting, by a first protocol entity of the first terminal, the first information to a third protocol entity, wherein the third protocol entity is located at an upper layer of the first protocol entity.

20. The method of any one of claims 1 to 19, wherein
the first interface is a Sidelink (SL) interface; and
the second interface is at least one of an uplink interface or a downlink interface.

21. A method for information indication, comprising:
reporting, by a first protocol entity of a first terminal, first information to a third protocol entity, wherein the third protocol entity is located at an upper layer of the first protocol entity, and wherein the first information is used for indicating a resource situation at a target interface, the target interface comprises at least one of a first interface or a second interface, the first interface is used for transmitting a signal between the first terminal and a second terminal, and the second interface is used for transmitting a signal between the first terminal and a base station.

22. The method of claim 21, wherein the first information being used for indicating the resource situation at the target interface comprises:
the first information being used for indicating whether the target interface is capable of performing data transmission; or
the first information being used for indicating a physical layer parameter of the target interface.

23. The method of claim 21 or 22, wherein a value of the first information is determined based on at least one of the following reference information:
Quality of Service (QoS) attribute information, a transmission mode, an access type, a resource pool type, a Provider Service Identifier (PSID), a destination address or a source address.

24. The method of claim 23, wherein different reference information corresponds to different values of the first information.

25. The method of any one of claims 21 to 24, wherein
the first interface is a Sidelink (SL) interface; and
the second interface is at least one of an uplink interface or a downlink interface.

26. An apparatus for information generation, comprising:
a generating unit, configured to generate first information based on second information and a first threshold, wherein the first information is used for indicating a resource situation at a target interface, the target interface comprises at least one of a first interface or a second interface, the first interface is used for transmitting a signal between a first terminal and a second terminal, and the second interface is used for transmitting a signal between the first terminal and a base station.

27. The apparatus of claim 26, wherein the first information being used for indicating the resource situation at the target interface comprises:
the first information being used for indicating whether the target interface is capable of performing data transmission; or
the first information being used for indicating a physical layer parameter of the target interface.

28. The apparatus of claim 26 or 27, wherein the second information comprises at least one of:
a channel busy ratio of a Sidelink (SL) resource, channel quality information of an SL, channel quality information of a downlink, or a range of a physical layer parameter.

29. The apparatus of claim 28, wherein the channel quality information of the SL comprises at least one of:
a Reference Signal Received Power (RSRP) measurement result of the SL, a Reference Signal Received Quality (RSRQ) measurement result of the SL, a Received Signal Strength Indicator (RSSI) measurement result of the SL, or a Signal to Interference Noise Ratio (SINR) measurement result of the SL.

30. The apparatus of claim 28 or 29, wherein the channel quality information of the downlink comprises at least one of:
an RSRP measurement result of the downlink, an RSRQ measurement result of the downlink, an RSSI measurement result of the downlink, or a SINR measurement result of the downlink.

31. The apparatus of any one of claims 28 to 30, wherein the channel quality information of the downlink refers to:
channel quality information of a downlink in a network presently accessed by the terminal; or
channel quality information of a downlink in a network in which the terminal presently resides.

32. The apparatus of any one of claims 28 to 31, wherein the physical layer parameter comprises at least one of: a mode for modulation and demodulation, a number of sub-channels, a number of retransmissions, or a transmission power.

33. The apparatus of any one of claims 28 to 32, wherein the physical layer parameter is generated according to at least one of:
the channel busy ratio of the SL resource, the channel quality information of the SL, or Quality of Service (QoS) attribute information of the SL.

34. The apparatus of claim 33, wherein the QoS attribute information of the SL comprises at least priority information.

35. The apparatus of any one of claims 26 to 34, wherein the first threshold is configured or pre-configured by a network.

36. The apparatus of any one of claims 26 to 35, wherein
the first threshold is acquired by a first protocol entity; or
the first threshold is reported by a second protocol entity to the first protocol entity, and the second protocol entity is located at a lower layer of the first protocol entity.

37. The apparatus of any one of claims 26 to 36, wherein a value of the first threshold is determined based on at least one of the following reference information:
Quality of Service (QoS) attribute information, a transmission mode, an access type, a resource pool type, a Provider Service Identifier (PSID), a destination address or a source address.

38. The apparatus of claim 37, wherein different reference information corresponds to different values of the first threshold.

39. The apparatus of any one of claims 26 to 38, wherein a value of the second information is determined based on at least one of the following reference information:
Quality of Service (QoS) attribute information, a transmission mode, an access type, a resource pool type, a Provider Service Identifier (PSID), a destination address or a source address.

40. The apparatus of claim 39, wherein different reference information corresponds to different values of the second information.

41. The apparatus of any one of claims 26 to 40, wherein
the second information is acquired by a first protocol entity; or
the second information is reported by a second protocol entity to the first protocol entity, and the second protocol entity is located at a lower layer of the first protocol entity.

42. The apparatus of any one of claims 26 to 41, wherein a value of the first information is determined based on at least one of the following reference information:
Quality of Service (QoS) attribute information, a transmission mode, an access type, a resource pool type, a Provider Service Identifier (PSID), a destination address or a source address.

43. The apparatus of claim 42, wherein different reference information corresponds to different values of the first information.

44. The apparatus of any one of claims 26 to 43, further comprising:
a reporting unit, configured to report the first information to a third protocol entity through a first protocol entity of the first terminal, wherein the third protocol entity is located at an upper layer of the first protocol entity.

45. The apparatus of any one of claims 26 to 44, wherein
the first interface is a Sidelink (SL) interface; and
the second interface is at least one of an uplink interface or a downlink interface.

46. An apparatus for information indication, comprising:
a reporting unit, configured to report first information to a third protocol entity through a first protocol entity of a first terminal, wherein the third protocol entity is located at an upper layer of the first protocol entity, and wherein the first information is used for indicating a resource situation at a target interface, the target interface comprises at least one of a first interface or a second interface, the first interface is used for transmitting a signal between the first terminal and a second terminal, and the second interface is used for transmitting a signal between the first terminal and a base station.

47. The apparatus of claim 46, wherein the first information being used for indicating the resource situation at the target interface comprises:
the first information being used for indicating whether the target interface is capable of performing data transmission; or
the first information being used for indicating a physical layer parameter of the target interface.

48. The apparatus of claim 46 or 47, wherein a value of the first information is determined based on at least one of the following reference information:
Quality of Service (QoS) attribute information, a transmission mode, an access type, a resource pool type, a Provider Service Identifier (PSID), a destination address or a source address.

49. The apparatus of claim 48, wherein different reference information corresponds to different values of the first information.

50. The apparatus of any one of claims 46 to 49, wherein
the first interface is a Sidelink (SL) interface; and
the second interface is at least one of an uplink interface or a downlink interface.

51. A terminal comprising a processor and a memory for storing a computer program, wherein the processor is configured to call and run the computer program stored in the memory to execute the method of any one of claims 1 to 20, or the method of any one of claims 21 to 25.

52. A chip comprising a processor, configured to call and run a computer program in a memory to enable a device installed with the chip to execute the method of any one of claims 1 to 20, or the method of any one of claims 21 to 25.

53. A computer-readable storage medium having stored therein a computer program which, when being executed by a computer, causes the computer to execute the method of any one of claims 1 to 20, or the method of any one of claims 21 to 25.

54. A computer program product, comprising computer program instructions, the computer program instructions enabling a computer to execute the method of any one of claims 1 to 20, or the method of any one of claims 21 to 25.

55. A computer program, enabling a computer to execute the method of any one of claims 1 to 20, or the method of any one of claims 21 to 25.
